# EUROPEAN PATENT APPLICATION

(11) **EP 3 750 626 A1**
(43) Date of publication of application: **16.12.2020**
(21) Application number: 18852728.7
(22) Date of filing: 30.08.2018
(51) Int. Cl.: B01J 27/24, B01J 23/75, B01J 37/08

(54) **TRANSITION METAL AND NITROGEN CO-DOPED CARBON COMPOSITE MATERIAL FOR USE IN FORMALDEHYDE PURIFICATION AND PREPARATION METHOD THEREFOR**

(30) Priority: 09.01.2018 CN 201810017088
(71) Applicant: Sun Yat-Sen University, Guangzhou, Guangdong 510275 (CN)
(72) Inventor: The designation of the inventor has not yet been filed
(74) Representative: ZHAOffice SPRL
(86) International application number: PCT/CN2018/103173
(87) International publication number: WO 2019/137020

(57) **Abstract**

This invention discloses one kind of co-doped carbon composite material with transition metal and nitrogen for removal of formaldehyde and its preparation method. The materials are composed of non-noble metals as active components and nitrogen-doped carbon carrier; The non-noble metal active components are transition metal salts of nickel, cobalt, iron and manganese or their mixtures. The carbon composite materials reported in this invention have high specific surface area and strong adsorption and catalytic decomposition performance for formaldehyde, and harsh conditions (e.g. high reaction temperature etc.) are not required for catalytic oxidation of formaldehyde. It also features in low cost, high catalytic efficiency at room temperature and long durability etc.

## Description

### Technical field

This invention is related to transition metal catalysts, particularly a transition metal / nitrogen co-doped carbon composite material for removal of formaldehyde and its preparation.

### Background

With continuous development of social economy, the demand for improving household environment are increasing. Many furniture and building materials can slowly release organic pollutants that are harmful to human health. One of the most typical pollutants is formaldehyde. It may cause major diseases such as nasopharyngeal cancer at high concentrations. Prolonged exposure to low concentrations of formaldehyde can cause irritation to eye and upper respiratory tract as well as dry skin etc. Due to the great harmful effects of formaldehyde to human health, a large number of extensive and in-depth research has been conducted on the treatment of formaldehyde pollution.

Various methods for eliminating formaldehyde have been developed. Common methods include physical adsorption, plant, plasma, photocatalytic and thermal catalytic decomposition. The physical adsorption methods can achieve satisfactory results in a short time but there is secondary pollution, and the adsorbents need to be replaced regularly; the plant method and the photocatalytic method have limited effect and cannot eliminate the influence of formaldehyde; the plasma methods are high-cost and the thermal catalytic decomposition method can remove formaldehyde efficiently without secondary pollution, but it is usually necessary to dope noble metals to ensure high catalytic performance at low temperature, that restricted the application of these catalysts due to high cost. Therefore, development of non-noble metal catalysts has attracted increasing attention. In recent years, many researchers have attempted to combine non-noble metals with nitrogen-doped carbon carriers to reduce the cost of the catalysts while increasing their catalytic activity and stability. Zhang et al. (Journal of Molecular Catalysis A: Chemical 417 (2016) 28-35) reported that transition metal-nitrogen co-doped graphene catalysts have excellent catalytic oxidation performance for CO at low-temperature, which is even better than that of various noble metal doped graphene catalysts. Shang et al. (Advanced Materials 8 (2016) 1668-1674) reported a transition metal-nitrogen co-doped carbon nanoframe with oxygen reduction performance superior to commercial Pt catalysts at the same loading. However, the above catalysts require complicated preparation process and have not been utilized for formaldehyde removal.

### Summary of the invention

The invention aims to overcome the defects of the existing formaldehyde removal catalyst, and provides a non-noble based catalysts with high-efficiency and low-cost.

In order to achieve the above goal, the present invention adopts the following technical solutions:
The transition metal/nitrogen co-doped carbon composite for formaldehyde removal, comprises non-noble metal active component and a nitrogen-doped carbon carrier. The non-noble metal active component is salt of transition metal.

Preferably, in the above transition metal / nitrogen co-doped carbon composite material for formaldehyde removal, the transition metal salt may be pure or mixture of nickel, cobalt, iron and manganese salts.

Preparation of the above transition metal / nitrogen co-doped carbon composite material for formaldehyde removal comprises the following steps: (1) Adding aqueous solution of transition metal salt to the solution of nitrogen-containing organic substance , heat and stir the mixture to obtain the transition metal precursor; 2) After washing and vacuum drying, the final product is obtained by calcination under an inert atmosphere.

Preferably, in the above preparation method, the transition metal precursor is aqueous solution of one or more of nitrate, chloride, acetate, and sulfate salts of transition metals.

Preferably, in the above preparation method, the nitrogen-containing organic substance is derivatives of imidazole or urea.

Preferably, in the above preparation method, the mass ratio of the transition metal salt, the nitrogen-containing organic substance and water is 1 : 1∼100 : 200∼1000.

Preferably, in the above preparation method, the reaction temperature for the transition metal salt and the nitrogen-containing organic solution is from 0 to 100 ° C, and the reaction time is from 1 to 36 h.

Preferably, in the above preparation method, the inert gas used is nitrogen, helium or argon gas.

Preferably, in the above preparation method, the calcination temperature is 300-900 ° C, and the calcination time is 1-36 h.

Compared with other methods used for formaldehyde removal, this invention has the following merits: the transition metal / nitrogen co-doped carbon composite material has high specific surface area and strong adsorption and catalytic oxidation capability for formaldehyde, and harsh conditions (e.g. high catalytic temperature) are not required for catalytic oxidation of formaldehyde. It has the characteristics of low cost, high catalytic efficiency at room temperature and long service life.

### Illustration

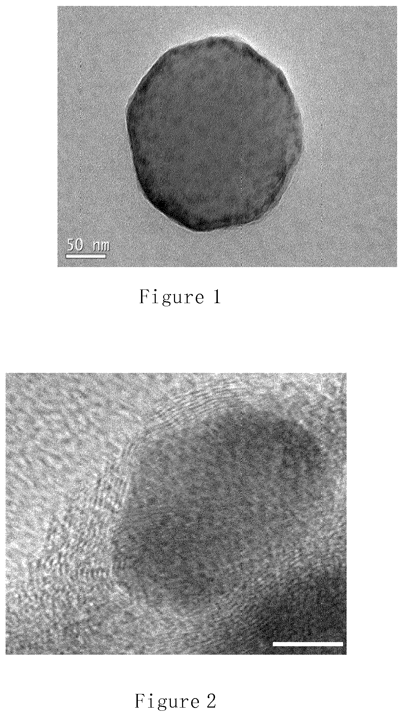

Figure 1 The TEM image of the precursor of Example 1;
Figure 2 The TEM image of the catalyst obtained after calcination of Example 2.

### Methods in detail

The non-noble metal catalyst for formaldehyde removal and the preparation method according to the present invention will be further described with some specific embodiments. The specific embodiments are intended to describe the present invention in further details rather than limiting scope of the invention. Unless stated, the methods and materials used in this invention are commonly used in this field.

### Example 1 Preparation of Transition Metal / Nitrogen Co-doped Carbon Composites

0.45 g cobalt nitrate, 5 g dimethylimidazole and 50 ml water were mixed, heated and stirred at 40 ° C for 10 h, and then washed and vacuum dried. The prepared solid powder was calcined at 300 ° C for 4 h under N₂ atmosphere to obtain a transition metal / nitrogen co-doped carbon composite.

### Example 2 Preparation of Transition Metal / Nitrogen Co-doped Carbon Composites

0.9 g cobalt nitrate, 11 g dimethylimidazole and 100 ml water were mixed, stirred at 60 ° C for 30 h, washed with methanol and vacuum dried. The prepared solid powder was calcined at 500 ° C for 5 h in Ar atmosphere to obtain a transition metal / nitrogen co-doped carbon composite.

### Example 3 Preparation of Transition Metal / Nitrogen Co-doped Carbon Composites

0.9 g cobalt nitrate, 16 g dimethylimidazole and 150 ml water were mixed, heated and stirred at 70 ° C for 2 h, and then washed and vacuum dried. The prepared solid powder was calcined at 600 ° C for 6 h in N₂ atmosphere to obtain a transition metal / nitrogen co-doped carbon composite.

### Example 4 Preparation of Transition Metal and Nitrogen Co-doped Carbon Composites

0.9 g cobalt nitrate, 20 g dimethylimidazole and 200 ml water were mixed, and stirred at 50 ° C for 8 h, followed by washing and vacuum drying. The prepared solid powder was calcined at 600 ° C for 6 h in air atmosphere to obtain a transition metal / nitrogen co-doped carbon composite.

### Example 5 Preparation of Transition Metal / Nitrogen Co-doped Carbon Composites

0.9 g nickel nitrate, 11 g dimethylimidazole and 100 ml water were mixed and stirred at 70 ° C for 2 h, followed by washing and vacuum drying. The prepared solid powder was calcined at 600 ° C for 8 h under N₂ atmosphere to obtain a transition metal / nitrogen co-doped carbon composite.

### Example 6 Preparation of Transition Metal / Nitrogen Co-doped Carbon Composites

0.9 g iron nitrate, 20 g dimethylimidazole and 150 ml water were mixed, heated and stirred at 80 ° C for 2 h, and then washed and vacuum dried. The prepared solid powder was calcined at 700 ° C for 10 h under N₂ atmosphere to obtain a transition metal / nitrogen co-doped carbon composite.

### Example 7 Preparation of Transition Metal / Nitrogen Co-doped Carbon Composites

0.9 g manganese chloride solid, 20 g dimethylimidazole and 150 ml water were mixed, heated and stirred at 80 ° C for 2 h, and then washed and vacuum dried. The prepared solid powder was calcined at 700 ° C for 10 h under N₂ atmosphere to obtain a transition metal /nitrogen co-doped carbon composite.

### Example 8 Preparation of Transition Metal / Nitrogen Co-doped Carbon Composites

0.9 g cerium nitrate, 20 g dimethylimidazole and 150 ml water were mixed, heated and stirred at 90 ° C for 4 h, and then washed and vacuum dried. The prepared solid powder was calcined at 700 ° C for 10 h in N₂ atmosphere to obtain a transition metal /nitrogen co-doped carbon composite.

### Example 9 Preparation of Transition Metal / Nitrogen Co-doped Carbon Composites

0.9 g nickel sulfate, 20 g dimethylimidazole and 150 ml water were mixed, heated and stirred at 80 ° C for 2 h, and then washed and vacuum dried. The prepared solid powder was calcined at 700 ° C for 10 h in N₂ atmosphere to obtain a transition metal / nitrogen co-doped carbon composite.

### Example 10 Preparation of Transition Metal / Nitrogen Co-doped Carbon Composites

0.5 g Co(NO₃)₂ solid, 0.5 g of Ni(NO₃)₂ and 11 g 2-methylimidazole were dissolved in 60 mL deionized water, stirred at 40 ° C for 5 h, then washed and dried at 80 ° C for 14 h. The prepared solid powder was calcined at 600 ° C for 5 h in N₂ atmosphere to obtain the final product.

### Example 11 Preparation of Transition Metal / Nitrogen Co-doped Carbon Composites

0.7 g CO(NO₃)₂, 0.2 g FeCl₂ and 6 g 2-methylimidazole solid were dissolved in 70 mL deionized water, stirred at 70 ° C for 3 h, and then washed and dried at 75 ° C for 18 h. The obtained solid powder was calcined at 450 ° C for 6 h in N₂ atmosphere to obtain the final product.

### Comparative example 1

0.9 g cerium nitrate, 4 g urea and 150 ml water were mixed, stirred at 60 ° C for 10 h, then washed and vacuum dried. The prepared solid powder was calcined at 700 ° C for 10 h to obtain a catalyst.

200 mg of the catalyst prepared in the above examples and comparative examples were respectively placed in a tubular fixed bed reactor for experimentation with the following experimental conditions: room temperature (∼30 ° C), oxygen 20%, nitrogen 80%. Formaldehyde gas is bubbled, and blown into the reaction system by nitrogen gas. The formaldehyde concentration of the reactor inlet was 50 mg / m3, and the gas hourly space velocity (GHSV) is 30000 ml g-1 h-1. The results of the activity evaluation are shown in Table 1.

**Table 1 Activity evaluation results of transition metal and nitrogen co-doped carbon composites**

| Sample | Room Temperature Formaldehyde Conversion Rate (%) |
|---|---|
| Example 1 | 50.4 |
| Example 2 | 95.7 |
| Example 3 | 60.1 |
| Example 4 | 81.3 |
| Example 5 | 58.6 |
| Example 6 | 37.9 |
| Example 7 | 34.2 |
| Example 8 | 45.8 |
| Example 9 | 47.1 |
| Example 10 | 96.7 |
| Example 11 | 86.1 |
| Comparative 1 | 15.1 |

It can be seen from Table 1 that with the preparation method and under conditions of the present invention, the catalytic formaldehyde removal performance of the prepared transition metal / nitrogen co-doped carbon composite material is significantly improved comparing with the comparative example.

## Claims

1. The distinguishing feature of one kind of transition metal/nitrogen co-doped carbon composite for the removal of formaldehyde is that it consists of non-noble metal active components and nitrogen-doped carbon carrier. The non-noble metal active components are transition metal salts.

2. According to claim 1, wherein the transition metals in the co-doped carbon composite materials for the removal of formaldehyde are the salts of nickel, cobalt, iron, manganese or their mixture.

3. According to claim 1, the preparation method for the transition metal/nitrogen co-doped carbon composite material for the removal of formaldehyde includes the following steps: (1) solution of transition metal salts were mixed with nitrogen-containing organic matter solution, and the mixture was heated with stirring to obtain precursors of transition metals; (2) the co-doped carbon composite material was prepared by calcinating the precursors in an inert atmosphere after washing and vacuum drying .

4. According to claim 3, wherein the transition metal precursors were prepared from aqueous solution of one or more transition metal salts of nitrate, chloride, acetate and sulfate.

5. According to claim 3, wherein the nitrogen-containing organic substance is an imidazole or urea derivative.

6. According to claim 3, wherein the mass ratio for the transition metal salt:the nitrogen-containing organic matter: water is from 1 : 1∼100 : 200∼1000.

7. According to claim 3, wherein the reaction temperature for the transition metal salt and the nitrogen-containing organic matter is from 0 to 100 ° C, and the reaction time is from 1 to 36 hours.

8. According to the method in claim 3, wherein nitrogen, helium, or argon has been employed for the inert atmosphere .

9. According to the method in claim 3, wherein the calcination temperature is 300-900 ° C, and the calcination time is from 1 to 36 hours.
